# EUROPEAN PATENT SPECIFICATION

(11) **EP 1 146 948 B1**
(45) Date of publication and mention of the grant of the patent: **25.02.2004**
(21) Application number: 99953449.8
(22) Date of filing: 05.11.1999
(51) Int. Cl.: B01D 47/16, B05B 3/02

(54) **A ROTOR FOR SPRAYING LIQUIDS, AND AN EXHAUST-GAS WASHER**
ROTOR ZUM VERSPRÜHEN VON FLÜSIGKEITEN UND ABGASWÄSCHER
ROTOR DE PULVERISATION DE LIQUIDE ET DISPOSITIF DE LAVAGE DE GAZ D'ECHAPPEMENT

(30) Priority: 06.11.1998 BR 9804473
(43) Date of publication of application: 24.10.2001
(73) Proprietor: Gomes Pinto, Antonio Germano, CEP-22021-040 Rio de Janeiro, RJ (BR)
(72) Inventor: Gomes Pinto, Antonio Germano, CEP-22021-040 Rio de Janeiro, RJ (BR)
(74) Representative: Bardo, Julian Eason
(86) International application number: PCT/BR1999/000091
(87) International publication number: WO 2000/027503

(56) References cited:
- WO-A1-96/15081
- FR-A- 2 081 210
- US-A- 1 408 736
- US-A- 3 653 187
- US-A- 5 061 299

## Description

The present invention refers to a liquid-spraying rotor, the purpose of which is to receive liquids such as pure water or a liquid solution containing water, and to fraction this liquid into as fine as possible particles and generate a gas flow in a direction. Especially, a rotor of the type suggested by the present invention has application in exhaust-gas washers, for instance, in garbage-burning installations. The present invention equally refers to an exhaust-gas washer containing such a rotor.

### Description of the Prior Art

Patent application PI 9404414-7 of November 10, 1994, belonging to the same owner, describes an installation for treating organic material, in order to convert it into a mineral state, especially for treating urban garbage. The installation proposed in that application includes a number of rotary propellers inside an exhaust-gas washer. The propellers have the double purpose of producing a rising stream of the gases and dividing a liquid washing solution into small particles, so as to increase the efficiency of washing exhaust gases with this solution. Although the propellers function satisfactorily, they generate an unwanted secondary effect, which consists in accumulating residues on the walls of the washer, due to the centrifugal effect of the propellers on the medium that circulates inside the washer.

### Objectives of the invention

One objective of the present invention is to provide a rotor that will avoid the above-mentioned drawback, namely accumulation of residues on the side walls, while maintaining the effect of generating rising streams.

Another objective of the invention is to provide a rotor that will produce a fractionation of a liquid into even smaller particles than that technique of the prior art, so as to increase the area of contact between the fractionated particles of the washing liquid and the particles in suspension in a gas,

### Brief Description of the Invention

According to the invention, a rotor is proposed which comprises:
- a first group of flaps suitable for, in rotation, spraying a liquid that falls onto them and produce a flow of gases and sprayed liquid in an axial direction; and
- a second group of flaps located radially more outwards than the first group and suitable for, in rotation, providing a flow of gases and sprayed liquid radially inwards.

Preferably, the second group of flaps is located on a ring that surrounds the first group of flaps.

The combination of generation of axial and radial flows inwards, achieved by means of the rotor proposed eliminates the unwanted effect of centrifuging particles, thus avoiding the accumulation of residues on walls of a washer in which the rotor is operating.

### Brief Description of the Drawings

The present invention will now be described in greater detail with reference to an embodiment represented in the drawings, in which:
Figure 1 is a schematic side view, partly in cross-section, of rotors according to the present invention, provided inside an exhaust-gas washer;
Figure 2 is a top view of a rotor according to figure 1.

### Detailed Description of the Figures

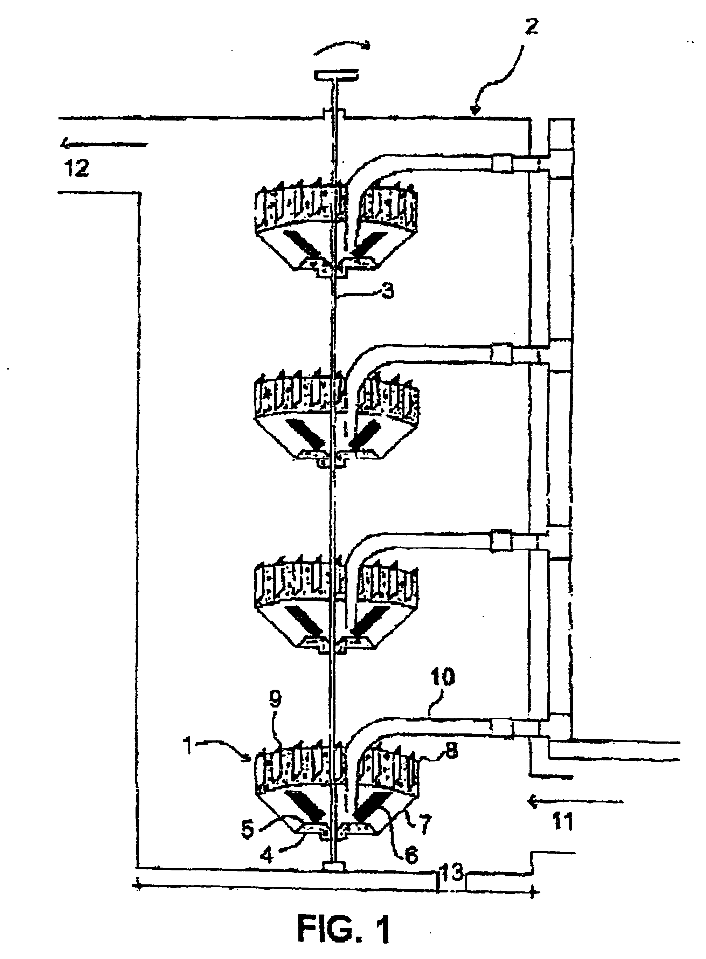

As can be seen from figure 1, a series of four rotors 1 is provided inside an exhaust-gas washer 2. The rotors 1 are fixed on an axle 3, which in turn rests on bearings and is turned by a non-illustrated motor.

Each rotor 1 comprises a disc-shaped base 4, formed integrally with a set of four first flaps 5 extending radially towards the axle 3. On a conical or truncated-conical side wall is a further set of four second flaps 6 inclined with respect to the axle 3. Of course, the number of flaps may vary, so as to adjust the capacity of fractionating and propelling the washing liquid.

Also integral with the base 4, a conical or truncated-conical side wall 7 is provided, which in turn is connected to a cylindrical wall 8 provided with flaps 9. The third flaps 9 may be produced by stamping and folding windows outwards from the cylindrical wall 8. Alternatively, one can make openings in the cylindrical wall 9, and weld plates that will form the third flaps 9. As an alternative to the embodiment illustrated, the third flaps 9 may be arranged immediately on the edge of larger diameter of the conical or truncated-conical wall.

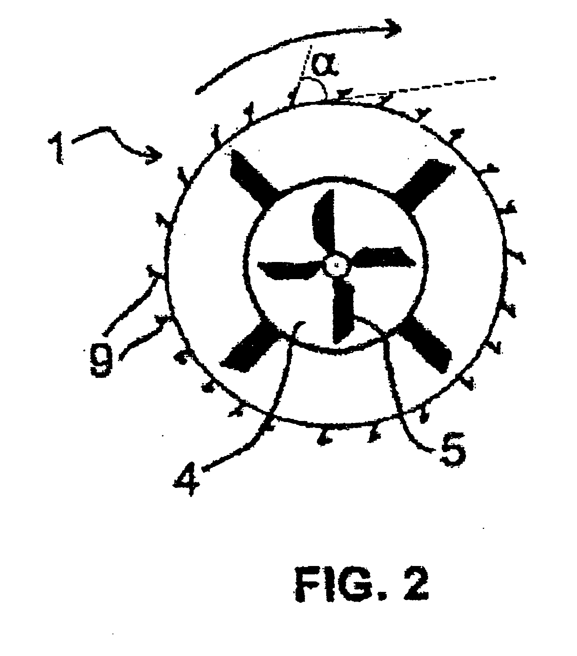

In the described embodiment, a first group of flaps is formed by the first flaps 5 and second flaps 6. The function of the first group of flaps 5, 6 is to fractionate into as small as possible particles a liquid that is poured onto the rotor 1 and to impart a vertical propulsion to them. A second group of flaps, formed by the third flaps 9, has the purpose of providing a radial gas/liquid flow from the outside inwards, so as to eliminate the centrifugal effect of the action of the first group of flaps 5, 6, and to provide a rising flow virtually without radial components. Therefore, the third flaps are arranged at an angle α (figure 2), where 0° < α < 90° with respect to the displacement direction of the rotor 1.

The illustrated gas washer 2 further comprises tubes 10 to produce a pure liquid or an aqueous solution for each rotor 1. Each tube discharge close to the first group of flaps 5, 6. The gas washer 2 has an inlet 11 for exhaust gases to be washed, an out let 12 for washed exhaust gases and an out let 13 for the liquid washing medium, which precipitates into the washer.

The illustrated assembly functions as follows:
- exhaust gases originated, for instance, from a garbage-burning furnace are admitted through the inlet 11 for exhaust gases to be washed;
- water or a washing liquid solution is admitted through the tubes 10 into each rotor 1;
- at high rotations the rotors 1 bring about a fractionation of the water of liquid solution by means of the first flaps 5, this fractionation being intensified by the vacuum that forms in the center of the rotor 1 due to the displacement of air provided by the first flaps 5 from the center to the periphery;
- the inclined second flaps 6 aid in producing a rising flow of the mist that forms from the finely fractionated water or liquid solution;
- the third flaps 9 produce a radial gas/liquid flow from outside inwards, thus reducing or eliminating the radial outwardly component of the displacement caused by the first and second flaps 5, 6, and confining the flow of gas/washing liquid to a rising axial direction;
- the washed exhaust gases leave the washer 2 through the outlet 12 for washed exhaust gases, while the liquid washing medium precipitates into the washer 2 and drains through the outlet 13.

Tests carried out with an assembly similar to that illustrated and described show that the embodiment proposed for a rotor enables a quite intense fractionation of the washing liquid, forming a fine mist inside the washer, which increases the area of contact with the particles in suspension in the exhaust gas and, consequently, increases the efficiency of washing the gases. Parallelly, the predominance of the axial component in the flow of mist formed from the washing liquid avoid, to a great extent, the accumulation of residues on the side watts of the washer.

A further preferred embodiment consists in conducting the pure liquid or aqueous solution to the rotors directly through a hollow and perforated axle 3 and/or with nozzles discharging into the rotors. In this embodiment, the tubes 10 are dispensed with.

An example of embodiment having been described and illustrated, it should be understood that the invention can be carried out in numberless other ways, being limited only by the contents of the accompanying claims, which include the equivalents. For instance, an effect of annulling radial components can be achieved with the propellers of case PI 9404414-7, by providing an outer ring, connected to the free ends of the propellers, containing flaps that generate a radial flow of gases inwards.

## Claims

1. Rotor for spraying liquids, said rotor comprising a first group of flaps (5,6) and a second group of flaps (9), the second group of flaps being located radially more outwards than the flaps of the first group, **characterised in that**:
- the first group of flaps (5, 6) is arranged to, when in rotation, fractionate said liquids and to impart a flow in axial direction, and
- the second group of flaps (9) is arranged to, when in rotation, impart a flow of gases and/or sprayed liquids radially inwards,
- the first and second group of flaps (5, 6 ; 9) being arranged in such a manner that said radially inward flow produced by the second group of flaps (9) reduce radial outward components of flow resulting from the rotation of the first group of flaps (5, 6).

2. A rotor according to claim 1, **characterised in that** said second group of flaps (9) is located on a ring (8) located radially more outward than said first group of flaps (5, 6).

3. A rotor according to claim 2, **characterised in that** said ring is formed by a cylindrical wall (8) provided with openings from which the flaps forming said second groups of flaps (9) are folded outwards.

4. A rotor according to claim 2, **characterised in that** said ring is formed by a cylindrical wall (8) provided with openings, close to which the flaps forming said second group of flaps (9) are soldered.

5. A rotor according to any one of claims 1 - 4, **characterised in that** said first group of flaps comprises first flaps (5) having radial orientation, upon which rotation a vacuum is formed in the centre.

6. A rotor according to any one of claims 1 - 5, **characterised in that** said first group of flaps comprises second flaps (6) inclined with respect to axis of rotation of the rotor (1).

7. A rotor according to claim 6, **characterised in that** said first group of flaps simultaneously comprises said first flaps (5) with radial orientation and said second inclined flaps (6), said first flaps (5) with radial orientation being integral with a disc-shaped base (4) provided with a passage for said axle (3).

8. A rotor according to claim 7, **characterised in that** a conical or truncated-conical side-wall section (7) is provided between said ring (8) and said disc-shaped base (4), the flaps of said first group of flaps (5, 6) being surrounded by said conical or truncated-conical side wall. (7).

9. A rotor according to claim 1 **characterised by** comprising:
- a disc-shaped base (4);
- a conical or truncated-conical side-wall section (7) extending from said base;
- a cylindrical wall (8) provided with openings, and connected to said conical or truncated-conical side-wall section (7);
wherein the first group of flaps (5,6) comprises first flaps (5) and second flaps (6), and the second group of flaps comprises third flaps (9)
- the first flaps (5) being provided on said disc-shaped base (4), and having radial orientation;
- the second flaps (6) being inclined with respect to an axle (3) around which said rotor rotates, and being provided on said conical or truncated-conical side-wall section (7); and
- the third flaps (9) being provided on said openings of said cylindrical wall (8), and arranged at an angle α with respect to the displacement direction of said rotor (1), where 0° < α < 90°, said third flaps being located radially more outward than said first and second flaps (5, 6);
wherein, in rotation, said first flaps (5) are suitable for spraying a liquid that falls onto them, said second flaps (6) are suitable for producing a rising flow of gases and sprayed liquid in axial direction, and said third flaps (9) located radially more outward than said first and second flaps (5, 6) are suitable for, in rotation, providing a flow of gases and sprayed liquid radially inwards to reduce radial outward components of flow produced by said first and second flaps (5, 6).

10. A rotor according to claim 9, **characterised in that** said third flaps (9) are folded outwards from said cylindrical wall (8).

11. A rotor according to claim 9, **characterised in that** said third flaps (9) are soldered to said cylindrical wall (8).

12. A rotor according to claim 9, **characterised in that** said first flaps (5) are integrally formed with said disc-shaped base (4).

13. An exhaust-gas washer comprising a washing compartment having at least one inlet (11) for exhaust gases to be washed, at least one inlet (10) for a gas-washing liquid, at least one outlet for washed gases and at least one outlet for washing liquid; having at least one rotary propelling and fractionating means inside it, for producing a flow of gases and fractionating the washing liquid, **characterised in that** said propelling and fractionating means is a rotor (1) according to claim 1 or 9.

14. A washer according to claim 13, **characterised in that** a tube (10) for admission of washing liquid is associated to each rotor (1), said tube discharging close to said first and second flaps (5, 6) of the rotor (1).

15. A washer according to claim 13, **characterised in that** said axle of the rotor(s) (3) is hollow and suitable for conducting said washing liquid to each rotor (1), said axle (3) being provided with perforations and/or nozzles discharging inside each rotor (1).

## Patentansprüche

1. Rotor zum Versprühen von Flüssigkeiten, umfassend eine erste Gruppe Flügelblätter (5, 6) und eine zweite Gruppe Flügelblätter (9), wobei die zweite Flügelblättergruppe sich radial weiter außen befindet als die Flügelblätter der ersten Gruppe, **dadurch gekennzeichnet, daß**
- die erste Flügelblättergruppe (5, 6) angeordnet ist, um bei Drehung die Flüssigkeiten zu zerteilen und eine Strömung in axialer Richtung herbeizuführen, und
- die zweite Flügelblättergruppe (9) angeordnet ist, um bei Drehung einen Strom aus Gasen und/oder versprühten Flüssigkeiten radial nach innen herbeizuführen,
- wobei die erste Gruppe und die zweite Gruppe Flügelblätter (5, 6; 9) so angeordnet sind, daß die von der zweiten Flügelblättergruppe (9) erzeugte, radial nach innen gerichtete Strömung die von der Drehung der ersten Flügelblättergruppe (5, 6) herrührenden, radial nach außen gerichteten Strömungskomponenten verringert.

2. Rotor nach Anspruch 1, **dadurch gekennzeichnet, daß** sich die zweite Flügelblättergruppe (9) an einem Ring (8) befindet, der radial weiter außen liegt als die erste Flügelblättergruppe (5, 6).

3. Rotor nach Anspruch 2, **dadurch gekennzeichnet, daß** der Ring durch eine zylindrische Wandung (8) gebildet wird, die mit Öffnungen versehen ist, aus denen die die zweite Flügelblättergruppe (9) bildenden Flügelblätter nach außen gefaltet sind.

4. Rotor nach Anspruch 2, **dadurch gekennzeichnet, daß** der Ring durch eine zylindrische Wandung (8) gebildet wird, die mit Öffnungen versehen ist, in deren Nähe die die zweite Flügelblättergruppe (9) bildenden Flügelblätter angelötet sind.

5. Rotor nach einem der Ansprüche 1 bis 4, **dadurch gekennzeichnet, daß** die erste Flügelblättergruppe erste Flügelblätter (5) mit radialer Ausrichtung umfaßt, auf deren Drehung hin ein Vakuum im Zentrum gebildet wird.

6. Rotor nach einem der Ansprüche 1 bis 5, **dadurch gekennzeichnet, daß** die erste Flügelblättergruppe zweite Flügelblätter (6) umfaßt, die bezüglich der Drehachse des Rotors (1) geneigt sind.

7. Rotor nach Anspruch 6, **dadurch gekennzeichnet, daß** die erste Flügelblättergruppe gleichzeitig die ersten Flügelblätter (5) mit radialer Ausrichtung und die zweiten, geneigten Flügelblätter (6) umfaßt, wobei die ersten Flügelblätter (5) mit radialer Ausrichtung in einen scheibenförmigen Sockel (4) integriert sind, der mit einem Durchgang für die Achse (3) versehen ist.

8. Rotor nach Anspruch 7, **dadurch gekennzeichnet, daß** ein konischer oder abgestumpft konischer seitlicher Wandungsbereich (7) zwischen dem Ring (8) und dem scheibenförmigen Sockel (4) bereitgestellt ist, wobei die Flügelblätter der ersten Flügelblättergruppe (5, 6) von der konischen oder abgestumpft konischen seitlichen Wandung (7) umgeben sind.

9. Rotor nach Anspruch 1, **dadurch gekennzeichnet, daß** der Rotor folgendes umfaßt:
- einen scheibenförmigen Sockel (4);
- einen konischen oder abgestumpft konischen seitlichen Wandungsbereich (7), der sich aus dem Sockel heraus erstreckt;
- eine zylindrische Wandung (8), die mit Öffnungen versehen und mit dem konischen oder abgestumpft konischen seitlichen Wandungsbereich (7) verbunden ist;
wobei die erste Flügelblättergruppe (5, 6) erste Flügelblätter (5) und zweite Flügelblätter (6) umfaßt, und die zweite Flügelblättergruppe dritte Flügelblätter (9) umfaßt, wobei
- die ersten Flügelblätter (5) auf dem scheibenförmigen Sockel (4) bereitgestellt sind und radiale Ausrichtung aufweisen;
- die zweiten Flügelblätter (6) bezüglich einer Achse (3) geneigt sind, um die sich der Rotor dreht, und auf dem konischen oder abgestumpft konischen seitlichen Wandungsbereich (7) bereitgestellt sind; und
- die dritten Flügelblätter (9) an den Öffnungen der zylindrischen Wandung (8) bereitgestellt und in einem Winkel α bezüglich der Bewegungsrichtung des Rotors (1) angeordnet sind, wobei 0° < α < 90°, wobei die dritten Flügelblätter radial weiter außen liegen als die ersten und zweiten Flügelblätter (5, 6);
wobei die ersten Flügelblätter (5) bei Drehung dazu geeignet sind, eine auf sie fallende Flüssigkeit zu versprühen, die zweiten Flügelblätter (6) dazu geeignet sind, einen aufsteigenden Strom aus Gasen und versprühter Flüssigkeit in axialer Richtung zu erzeugen, und die dritten Flügelblätter (9), die radial weiter außen liegen als die ersten und zweiten Flügelblätter (5, 6), dazu geeignet sind, bei Drehung einen Strom aus Gasen und versprühter Flüssigkeit radial nach innen zu erzeugen, um die von den ersten und zweiten Flügelblättern (5, 6) erzeugten, radial nach außen gerichteten Strömungskomponenten zu verringern.

10. Rotor nach Anspruch 9, **dadurch gekennzeichnet, daß** die dritten Flügelblätter (9) aus der zylindrischen Wandung (8) nach außen gefaltet sind.

11. Rotor nach Anspruch 9, **dadurch gekennzeichnet, daß** die dritten Flügelblätter (9) an die zylindrische Wandung (8) gelötet sind.

12. Rotor nach Anspruch 9, **dadurch gekennzeichnet, daß** die ersten Flügelblätter (5) integriert in den scheibenförmigen Sockel (4) ausgebildet sind.

13. Abgaswäscher, umfassend eine Waschkammer mit wenigstens einem Einlaß (11) für zu waschende Abgase, wenigstens einem Einlaß (10) für eine Gaswaschflüssigkeit, wenigstens einem Auslaß für die gewaschenen Gase und wenigstens einem Auslaß für die Waschflüssigkeit; mit wenigstens einer rotierenden Treib- und Verteilungseinrichtung im Innern derselben zur Erzeugung eines Gasstroms und zur Verteilung der Waschflüssigkeit, **dadurch gekennzeichnet, daß** die Treib- und Verteilungseinrichtung ein Rotor (1) nach Anspruch 1 oder 9 ist.

14. Wäscher nach Anspruch 13, **dadurch gekennzeichnet, daß** jedem Rotor (1) ein Rohr (10) zum Einleiten von Waschflüssigkeit zugeordnet ist, wobei der Ausstrom aus dem Rohr in der Nähe der ersten und zweiten Flügelblätter (5, 6) des Rotors (1) erfolgt.

15. Wäscher nach Anspruch 13, **dadurch gekennzeichnet, daß** die Achse (3) des/der Rotors/Rotoren hohl und dazu geeignet ist, die Waschflüssigkeit dem jeweiligen Rotor (1) zuzuleiten, wobei die Achse (3) mit Löchern und/oder Düsen versehen ist, deren Ausstrom im Innern des jeweiligen Rotors (1) erfolgt.

## Revendications

1. Rotor de brumisation de liquides, le rotor comprenant un premier groupe de volets (5, 6) et un second groupe de volets (9), le second groupe de volets étant situé radialement plus à l'extérieur que les volets du premier groupe, **caractérisé par le fait que**:
- le premier groupe de volets (5, 6) est agencé pour, en rotation, fractionner les liquides et engendrer un flux en direction axiale, et
- le second groupe de volets (9) est agencé pour, en rotation, engendrer un flux de gaz et/ou de liquides brumisés radialement vers l'intérieur,
- les premier et second groupes de volets (5, 6 ; 9) étant agencés de façon à ce que le flux radialement interne produit par le second groupe de volets (9) réduise des composantes radialement externes du flux résultant de la rotation du premier groupe de volets (5, 6).

2. Rotor selon la revendication 1, **caractérisé par le fait que** le second groupe de volets (9) est situé sur une bague (8) placée radialement plus à l'extérieur que le premier groupe de volets (5, 6).

3. Rotor selon la revendication 2, **caractérisé par le fait que** la bague est formée par une paroi cylindrique (8) comportant des ouvertures à partir desquelles les volets formant le second groupe de volets (9) sont pliés vers l'extérieur.

4. Rotor selon la revendication 2, **caractérisé par le fait que** la bague est formée par une paroi cylindrique (8) comportant des ouvertures, à proximité desquelles sont soudés les volets formant le second groupe de volets (9).

5. Rotor selon l'une quelconque des revendications 1 à 4, **caractérisé par le fait que** le premier groupe de volets comprend des premiers volets (5) à orientation radiale dont la rotation forme un vide au centre.

6. Rotor selon l'une quelconque des revendications 1 à 5, **caractérisé par le fait que** le premier groupe de volets comprend des deuxièmes volets (6) inclinés par rapport à l'axe de rotation du rotor (1).

7. Rotor selon la revendication 6, **caractérisé par le fait que** le premier groupe de volets comprend simultanément les premiers volets (5) à orientation radiale et les deuxièmes volets inclinés (6), les premiers volets (5) à orientation radiale étant d'un seul tenant avec une base en forme de disque (4) comportant un passage pour l'axe (3).

8. Rotor selon la revendication 7, **caractérisé par le fait qu'**il est prévu une partie de paroi latérale conique ou tronconique (7) entre la bague (8) et la base en forme de disque (4), les volets du premier groupe de volets (5, 6) étant entourés par la paroi latérale conique ou tronconique (7).

9. Rotor selon la revendication 1, **caractérisé par le fait qu'**il comprend:
une base en forme de disque (4),
une partie de paroi latérale conique ou tronconique (7) s'étendant depuis la base,
une paroi cylindrique (8) comportant des ouvertures, et reliée à la partie de paroi latérale conique ou tronconique (7),
dans lequel le premier groupe de volets (5, 6) comprend des premiers volets (5) et des deuxièmes volets (6), et le second groupe de volets comprend des troisièmes volets (9),
les premiers volets (5) étant placés sur la base en forme de disque (4) et ayant une orientation radiale,
les deuxièmes volets (6) étant inclinés par rapport à un axe (3) de rotation du rotor, et étant placés sur la partie de paroi latérale conique ou tronconique (7), et
les troisièmes volets (9) étant placés sur les ouvertures de la paroi cylindrique (8) et disposés selon un angle α par rapport à la direction de déplacement du rotor (1), avec 0° < α < 90°, les troisièmes volets étant placés radialement plus à l'extérieur que les premiers et deuxièmes volets (5, 6),
dans lequel, en rotation, les premiers volets (5) sont agencés pour brumiser un liquide tombant dessus, les deuxièmes volets (6) sont agencés pour produire un flux montant de gaz et de liquide brumisé en direction axiale, et les troisièmes volets (9), placés radialement plus à l'extérieur que les premiers et deuxièmes volets (5, 6), sont agencés pour, en rotation, fournir un flux de gaz et de liquide brumisé radialement vers l'intérieur pour réduire des composantes radialement externes de flux produit par les premiers et deuxièmes volets (5, 6).

10. Rotor selon la revendication 9, **caractérisé par le fait que** les troisièmes volets (9) sont pliés vers l'extérieur depuis la paroi cylindrique (8).

11. Rotor selon la revendication 9, **caractérisé par le fait que** les troisièmes volets (9) sont soudés à la paroi cylindrique (8).

12. Rotor selon la revendication 9, **caractérisé par le fait que** les premiers volets (5) sont formés d'un seul tenant avec la base en forme de disque (4).

13. Dispositif de lavage de gaz comprenant un compartiment de lavage ayant au moins une entrée (11) pour des gaz d'échappement à laver, au moins une entrée (10) pour un liquide de lavage de gaz, au moins une sortie pour les gaz lavés et au moins une sortie pour le liquide de lavage contenant au moins un moyen rotatif de propulsion et de fractionnement, pour produire un flux de gaz et fractionner le liquide de lavage, **caractérisé par le fait que** le moyen de propulsion et de fractionnement est un rotor (1) selon l'une des revendications 1 et 9.

14. Dispositif de lavage selon la revendication 13, **caractérisé par le fait qu'**un tube (10) d'admission de liquide de lavage est associé à chaque rotor (1), le tube se terminant près des premiers et deuxièmes volets (5, 6) du rotor (1).

15. Dispositif selon la revendication 13, **caractérisé par le fait que** l'axe de rotor(s) (3) est creux et agencé pour conduire le liquide de lavage à chaque rotor (1), l'axe (3) comportant des perforations et/ou des buses débouchant à l'intérieur de chaque rotor (1).
